# EUROPEAN PATENT APPLICATION

(11) **EP 4 510 775 A1**
(43) Date of publication of application: **19.02.2025**
(21) Application number: 24153213.4
(22) Date of filing: 22.01.2024
(51) Int. Cl.: H05B 3/04, F24H 1/00, F24H 1/18, F24H 1/20, F24H 9/02, F24H 9/1818, H05B 3/50, B60H 1/22

(54) **ELECTRIC DEVICE WITH PTC HEATER AND CONTROL BOARD INTEGRATED WITH BUS MODULE**

(30) Priority: 18.08.2023 CN 202322242269 U
(71) Applicant: Dongguan Sharing Electronics Co., Ltd., Dongguan City, Guangdong Province 523991 (CN)
(72) Inventor: WU, Xiang, Shenzhen City 518102 (CN); WEN, Juntao, Shenzhen City 518057 (CN); E, Xingang, Dongguan City 523336 (CN)
(74) Representative: Eisenführ Speiser

(57) **Abstract**

Provided is an electric device with PTC heater and control board integrated with bus module, including a plastic water box, wherein a cast aluminum part is inserted into the plastic water box and fastened to the plastic water box by a first bolt, the cast aluminum part is provided with an upper cover at its top, the cast aluminum part is provided with a high-voltage socket connected to the cast aluminum part by a third bolt on a side and a low-voltage socket connected to the cast aluminum part by a fourth bolt on a side away from the high-voltage socket.

## Description

### TECHNICAL FIELD

The disclosure relates to the technical field of electrical device, in particular to an electric device with PTC heater and control board integrated with bus module.

### BACKGROUND

Positive temperature coefficient (PTC) heater is a heater that uses PTC thermistor element as a heat source. Ceramic PTC thermistor elements are used in air conditioning auxiliary electric heaters. The PTC thermistor element has the characteristics of increasing or decreasing the resistance as the ambient temperature changes, therefore, the PTC heater has performance of energy saving, constant temperature, safety and long service life. In the prior art, a cavity for accommodating a PTC heating element and a cavity for accommodating printed circuit board assembly (PCBA) are separated, which results in a device with complex structure and large space occupation. A traditional PTC heating element is arranged in U-shaped tube which is then mounted in the cavity for accommodating the PTC heating element. This solution makes the output power unstable due to the coordination of the size of the U-shaped tube and the cavity for accommodating the PTC heating element.

No effective solutions have yet been proposed for the problems in related technologies.

### SUMMARY

In view of the problems in the related technologies, the present disclosure proposes an electric device with PTC heater and control board integrated with bus module, including a plastic water box, wherein a cast aluminum part is inserted into the plastic water box and fastened to the plastic water box by a first bolt, the cast aluminum part is provided with an upper cover at its top, the cast aluminum part is provided with a high-voltage socket connected to the cast aluminum part by a third bolt on a side and a low-voltage socket connected to the cast aluminum part by a fourth bolt on a side away from the high-voltage socket, the cast aluminum part is provided with a cable assembly on a side adjacent to the side on which the low-voltage socket is arranged, the plastic water box has a plurality of water channels which are evenly distributed at its bottom, and the cast aluminum part has a plurality of slots corresponding to the water channels at a bottom of the cast aluminum part, the cast aluminum part is provided with a plurality of PTC heater accommodating cavities in which matching U-shaped aluminum tubes are arranged, a PTC heater is arranged in the U-shaped aluminum tube, a silicone sheet is arranged within the cast aluminum part and above the PTC heater, and a PCB control board is arranged within the cast aluminum part and above the silicone sheet, and a number of evenly distributed second bolts extend through the PCB control board and the silicone sheet to engage with the cast aluminum part.

Preferably, the plastic water box is provided with a sealing ring.

Preferably, an epoxy resin plate is provided on a bottom of the upper cover.

Preferably, a tapered block is arranged within the PTC heater accommodating cavity and on a side of the U-shaped aluminum tube.

Preferably, on the PCB control board, a high-voltage module is provided, a low-voltage module is provided adjacent to the high-voltage module, and IGBT pins are arranged away from the high-voltage module, and wherein a PTC bus grouping module is arranged between the high-voltage module and the IGBT pins and on the PCB control board.

The beneficial effects of the disclosure are: by connecting the PTC heater accommodating cavity with a cavity for accommodating the PCB control board, the volume of the device is reduced. A height of the PTC heater is kept 5 mm lower than a top surface of the PTC heater accommodating cavity, which ensures effective transfer of heat from the PTC heater to coolants in the water channels and reduces the temperature of the cavity for accommodating the PCB control board. The device of this disclosure omits an additional bus board, and integrates a bus grouping module onto the PCB control board, achieving the control board integrated with bus functionality. The PTC heater is directly connected to the PCB control board, which results in a device with simple structure and small space. After inserting the U-shaped aluminum tube with the PTC heater into the PTC heater accommodating cavity, by inserting one tapered block, the heating power is stable due to the fact that the U-shaped aluminum tube is stably held. By positioning the silicone sheet below the PCB control board, poor insulation caused by tin slag falling onto the PTC heater during welding is avoided.

### BRIEF DESCRIPTION OF THE DRAWINGS

In order to explain the technical solutions in the present disclosure more clearly, the accompanying drawings will be briefly introduced below. Obviously, the drawings in the following description only show some embodiments of the present disclosure. For those of ordinary skill in the art, without exerting any creative effort, other embodiments can also be obtained based on these drawings.
FIG. 1 is a perspective view of an electric device with PTC heater and control board integrated with bus module according to one embodiment.
FIG. 2 is an exploded view of an electric device with PTC heater and control board integrated with bus module according to one embodiment.
FIG. 3 is a cross-sectional view of an electric device with PTC heater and control board integrated with bus module according to one embodiment.
FIG. 4 is another cross-sectional view of an electric device with PTC heater and control board integrated with bus module according to one embodiment.
FIG. 5 is a cross-sectional view of a cast aluminum part of the electric device with PTC heater and control board integrated with bus module according to one embodiment.
FIG. 6 is a schematic diagram of a PCB control board of the electric device with PTC heater and control board integrated with bus module according to one embodiment.

### Reference list

1-plastic water box; 2-cast aluminum part; 3-upper cover; 4-high-voltage socket; 5-low-voltage socket; 6-water channel; 7-PTC heater accommodating cavity; 8-U-shaped aluminum tube; 9-PTC heater; 10-silicone sheet; 11-PCB control board; 12-cable assembly; 13-sealing ring; 14-epoxy resin board; 15-high voltage module; 16-low voltage module; 17-IGBT pin; 18-PTC bus grouping module; 19-tapered block.

### DETAILED DESCRIPTION

In order to further explain each embodiment, the present disclosure provides drawings, which are part of the disclosure. They are mainly used to illustrate the embodiments and used to explain the operating principles of the embodiments in conjunction with the relevant descriptions in the specification. By referring to these contents, those skilled in the art will be able to understand other possible implementations and advantages of the present disclosure. The components in the figures are not drawn to scale, and similar component symbols are generally used to represent similar components.

According to some embodiments of the present disclosure, an electric device with controller acting as bus board of PTC heater is provided.

### Embodiment 1

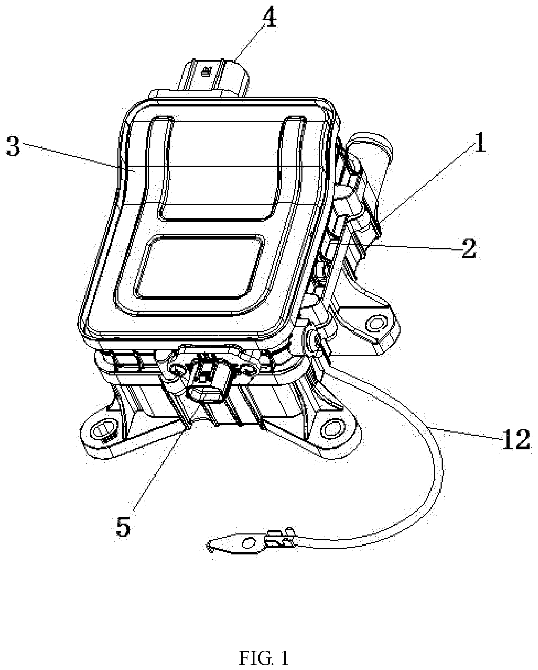

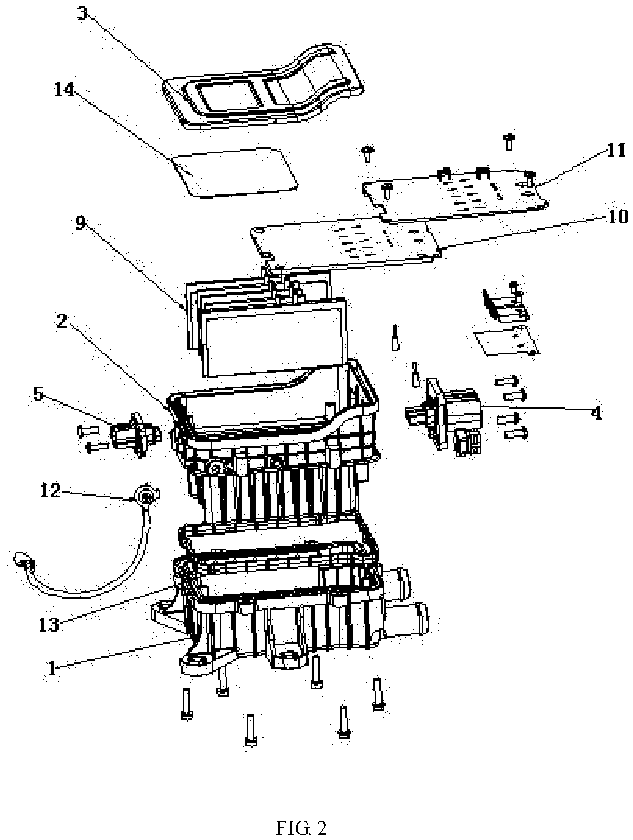

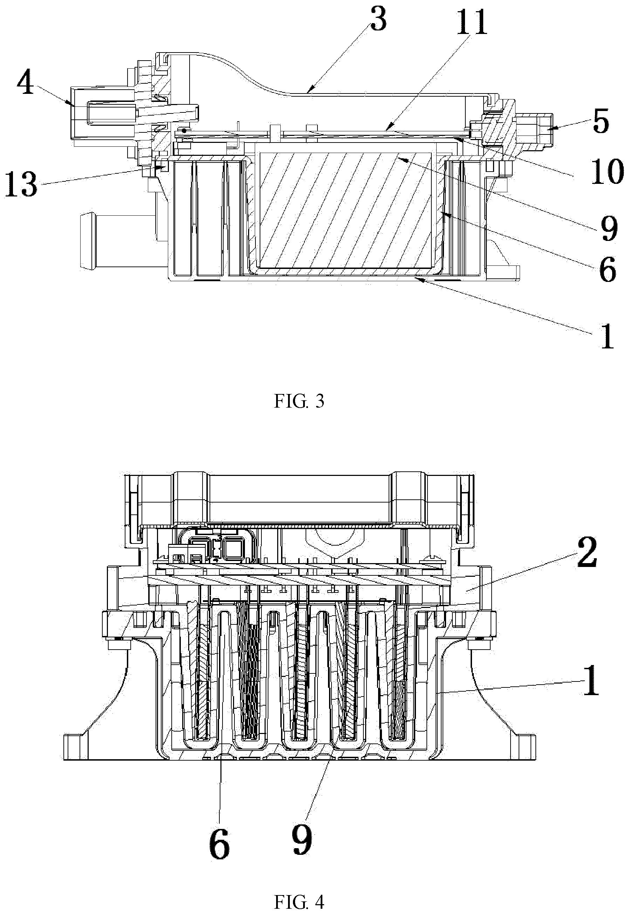

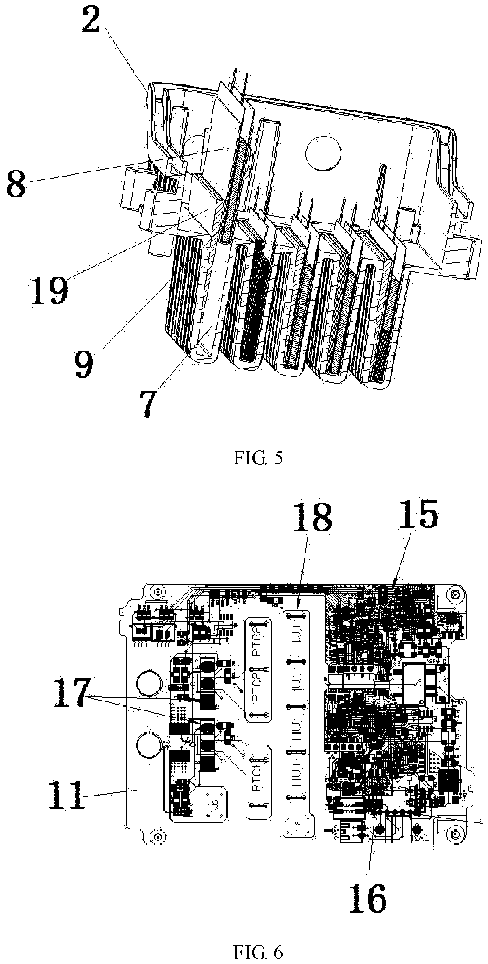

As shown in FIGs. 1-6, an electric device with PTC heater and control board integrated with bus module includes a plastic water box 1. A cast aluminum part 2 is inserted into the plastic water box 1 and fastened to the plastic water box 1 by a first bolt. The cast aluminum part 2 is provided with an upper cover 3 at its top. The cast aluminum part 2 is provided with a high-voltage socket 4 connected to the cast aluminum part 2 by a third bolt on a side and a low-voltage socket 5 connected to the cast aluminum part 2 by a fourth bolt on a side away from the high-voltage socket 4 (or on an opposite side). The cast aluminum part 2 is provided with a cable assembly 12 on a side adjacent to the side on which the low-voltage socket 5 is arranged. The plastic water box 1 has a plurality of water channels 6 which are evenly distributed at its bottom, and the cast aluminum part 2 has a plurality of slots corresponding to the water channels 6 at a bottom of the cast aluminum part 2. The cast aluminum part 2 is provided with a plurality of PTC heater accommodating cavities 7 in which matching U-shaped aluminum tubes 8 are arranged. A PTC heater 9 is arranged in the U-shaped aluminum tube 8, a silicone sheet 10 is arranged within the cast aluminum part 2 and above the PTC heater 9, and a PCB control board 11 is arranged within the cast aluminum part 2 and above the silicone sheet 10. Several evenly distributed second bolts extend through the PCB control board 11 and the silicone sheet 10 to engage with the cast aluminum part 2.

### Embodiment 2

As shown in FIGs. 1-6, an electric device with PTC heater and control board integrated with bus module includes a plastic water box 1. A cast aluminum part 2 is inserted into the plastic water box 1 and fastened to the plastic water box 1 by a first bolt. The cast aluminum part 2 is provided with an upper cover 3 at its top. The cast aluminum part 2 is provided with a high-voltage socket 4 connected to the cast aluminum part 2 by a third bolt on a side and a low-voltage socket 5 connected to the cast aluminum part 2 by a fourth bolt on a side away from the high-voltage socket 4 (or on an opposite side). The cast aluminum part 2 is provided with a cable assembly 12 on a side adjacent to the side on which the low-voltage socket 5 is arranged. The plastic water box 1, at its bottom, has a plurality of water channels 6 which are evenly distributed, and the cast aluminum part 2 has a plurality of slots corresponding to the water channels 6 at a bottom of the cast aluminum part 2. The cast aluminum part 2 is provided with a plurality of PTC heater accommodating cavities 7 in which matching U-shaped aluminum tubes 8 are arranged. A PTC heater 9 is arranged in the U-shaped aluminum tube 8, a silicone sheet 10 is arranged within the cast aluminum part 2 and above the PTC heater 9, and a PCB control board 11 is arranged within the cast aluminum part 2 and above the silicone sheet 10. Several evenly distributed second bolts extend through the PCB control board 11 and the silicone sheet 10 to engage with the cast aluminum part 2. The plastic water box 1 is provided with a sealing ring 13. An epoxy resin plate 14 is provided on a bottom of the upper cover 3. A tapered block 19 is arranged within the PTC heater accommodating cavity 7 and on a side of the U-shaped aluminum tube 8. On the PCB control board 11, a high-voltage module 15 is provided, a low-voltage module 16 is provided adjacent to the high-voltage module 15, and IGBT pins 17 are arranged away from the high-voltage module 15. A PTC bus grouping module 18 is arranged between the high-voltage module 15 and the IGBT pins 17 and on the PCB control board 11.

In practical applications, by connecting the PTC heater accommodating cavity 7 with a cavity for accommodating the PCB control board 11, the volume of the device is reduced. A height of the PTC heater 9 is kept 5 mm lower than a top surface of the PTC heater accommodating cavity 7, which ensures effective transfer of heat from the PTC heater 9 to coolants in the water channels and reduces the temperature of the cavity for accommodating the PCB control board 11. The device of this disclosure omits an additional bus board, and integrates a bus grouping module onto the PCB control board 11, achieving the control board integrated with bus functionality. The PTC heater 9 is directly connected to the PCB control board 11, which results in a device with simple structure and small space. After inserting the U-shaped aluminum tube 8 with the PTC heater 9 into the PTC heater accommodating cavity 7, by inserting one tapered block 19, the heating power is stable due to the fact that the U-shaped aluminum tube 8 is stably held. By positioning the silicone sheet 10 below the PCB control board 11, poor insulation caused by tin slag falling onto the PTC heater 9 during welding is avoided.

In summary, with the help of the above technical solution of the present disclosure, by connecting the PTC heater accommodating cavity with a cavity for accommodating the PCB control board, the volume of the device is reduced. A height of the PTC heater is kept 5 mm lower than a top surface of the PTC heater accommodating cavity, which ensures effective transfer of heat from the PTC heater to coolants in the water channels and reduces the temperature of the cavity for accommodating the PCB control board. The device of this disclosure omits an additional bus board, and integrates a bus grouping module onto the PCB control board 11, achieving the control board integrated with bus functionality. The PTC heater is directly connected to the PCB control board, which results in a device with simple structure and small space. After inserting the U-shaped aluminum tube with the PTC heater into the PTC heater accommodating cavity, by inserting one tapered block, the heating power is stable due to the fact that the U-shaped aluminum tube is stably held. By positioning the silicone sheet below the PCB control board, poor insulation caused by tin slag falling onto the PTC heater during welding is avoided.

The above descriptions are only preferred embodiments of the present disclosure and are not intended to limit the present disclosure. Any modifications, equivalent substitutions, improvements made within the spirit and principles of the present disclosure shall be included in within the protection scope of this disclosure.

## Claims

1. An electric device with PTC heater and control board integrated with bus module, **characterized in that**, the electric device comprises a plastic water box (1), a cast aluminum part (2) is inserted into the plastic water box (1) and fastened to the plastic water box (1) by a first bolt, the cast aluminum part (2) is provided with an upper cover (3) at its top, the cast aluminum part (2) is provided with a high-voltage socket (4) connected to the cast aluminum part (2) by a third bolt on a side and a low-voltage socket (5) connected to the cast aluminum part (2) by a fourth bolt on a side away from the high-voltage socket (4), the cast aluminum part (2) is provided with a cable assembly (12) on a side adjacent to the side on which the low-voltage socket (5) is arranged, the plastic water box (1) has a plurality of water channels (6) which are evenly distributed at its bottom, and the cast aluminum part (2) has a plurality of slots corresponding to the water channels (6) at a bottom of the cast aluminum part (2), the cast aluminum part (2) is provided with a plurality of PTC heater accommodating cavities (7) in which matching U-shaped aluminum tubes (8) are arranged, a PTC heater (9) is arranged in the U-shaped aluminum tube (8), a silicone sheet (10) is arranged within the cast aluminum part (2) and above the PTC heater (9), and a PCB control board (11) is arranged within the cast aluminum part (2) and above the silicone sheet (10), and a number of evenly distributed second bolts extend through the PCB control board (11) and the silicone sheet (10) to engage with the cast aluminum part (2).

2. The electric device according to claim 1, wherein the plastic water box (1) is provided with a sealing ring (13).

3. The electric device according to claim 1, wherein an epoxy resin plate (14) is provided on a bottom of the upper cover (3).

4. The electric device according to claim 1, wherein a tapered block (19) is arranged within the PTC heater accommodating cavity (7) and on a side of the U-shaped aluminum tube (8).

5. The electric device according to claim 1, wherein, on the PCB control board (11), a high-voltage module (15) is provided, a low-voltage module (16) is provided adjacent to the high-voltage module (15), and IGBT pins (17) are arranged away from the high-voltage module (15), and wherein a PTC bus grouping module (18) is arranged between the high-voltage module (15) and the IGBT pins (17) and on the PCB control board (11).
